# EUROPEAN PATENT APPLICATION

(11) **EP 2 336 959 A1**
(43) Date of publication of application: **22.06.2011**
(21) Application number: 10014681.0
(22) Date of filing: 16.11.2010
(51) Int. Cl.: G06Q 10/00

(54) **System and method for modeling, executing, and monitoring activities**

(30) Priority: 15.12.2009 US 638715
(71) Applicant: SAP AG, 69190 Walldorf (DE)
(72) Inventor: Franke, Joern, 69190 Walldorf (DE); Charoy, Francois, 69190 Walldorf (DE); Ulmer, Cedric, 69190 Walldorf (DE); Kleser, Gerald, 69190 Walldorf (DE)
(74) Representative: Müller-Boré & Partner Patentanwälte

(57) **Abstract**

A method to manage a plurality of activities that includes, for example, determining a dependency between a state of a first activity of the plurality of activities and a state of a second activity of the plurality of activities, the dependency requiring that the state of the second activity change from a first state to a second state for a non-violating change in the state of the first activity from a third state to a fourth state to occur; monitoring the first activity and the second activity to detect a violation of the dependency; and taking a remedial action responsive to the detecting of the violation.

## Description

### TECHNICAL FIELD

The present application relates generally to the technical field of inter-organizational activity management. In one specific example, embodiments relate to a method and system to manage the change of the state of a first activity according to a conditional dependency of the change of the state of the first activity on the state of a second activity.

### BACKGROUND

In today's economy, the boundaries between companies have begun to dissolve. High flexibility may be required to cope with external market forces and events. Over recent years, we have seen a rise of different organizations dynamically interacting with each other. Examples of such interaction networks include disaster crisis management, project/program management, activity management in the creative industries, emergency room management, cellular manufacturing management, and many more. This rise in dynamic interaction between organizations requires new approaches for inter-organizational process (or activity) management.

Current approaches for inter-organizational process management, which have been in existence for over a decade, have not attracted the commercial market (e.g., Grefen, Aberer et al. 2000; Chebbi, Dustdar et al., 2006). Their failure to attract the commercial market has several reasons, one of which may be that they are based on a fixed control-flow model. A control flow may have to be agreed on by all participants in the process, which may be, in reality, an unrealistic assumption, especially when there are more than two partners involved. Additionally, unlike the control-flow model suggests, processes may not be linear. Therefore, approaches that focus too much on control-flows may not represent the reality of dynamic processes in a dynamic environment adequately (see Denning, 2006). Furthermore, some of the current approaches may lead to inflexible processes that are not followed. For example, the disaster management domain requires highly flexible process management with little time for process adaption and re-enactment. Other dynamic domains, such as project/program management, business networks, emergency rooms, cellular manufacturing, or creative industry processes, also have similar requirements. Moreover, the enactment of a system of some of these approaches may hinder flexibility instead of encouraging it. In the end, these approaches may reduce process efficiency and effectiveness, leading to loss of business value.

### BRIEF DESCRIPTION OF THE DRAWINGS

Some embodiments are illustrated by way of example and not limitation in the figures of the accompanying drawings in which:

FIG. 1 is an activity diagram of an example disaster recovery plan to which various embodiments may be applied;

FIG. 2 is a block diagram of an example architecture of an activity-management service to manage, execute, and monitor activities, such as the activities shown in the disaster recovery plan of FIG. 1;

FIG. 3A is a block diagram of various engines of an example embodiment of the activity-management service shown in FIG. 2;

FIG. 3B is a block diagram of various additional engines of an example embodiment of the activity-management service shown in FIG. 2;

FIG. 3C is a block diagram of various additional engines of an example embodiment of the activity-management service shown in FIG. 2;

FIG. 4A is a state diagram of an example embodiment of an activity type;

FIG. 4B is a state diagram of an example embodiment of an activity type for which governance arrangements are defined;

FIG. 5 is a block diagram illustrating examples of visual representations of types of temporal dependencies;

FIG. 6 is a diagrammatic representation of an example embodiment of an activity model that includes multiple activities having interrelated dependencies;

FIG. 7 is a diagrammatic representation of an example embodiment of an activity model that includes multiple dependencies between a single strategic activity and multiple operational activities;

FIG. 8A is a table diagram showing an example embodiment of an execution trace generated by the activity-management service;

FIG. 8B is a diagram showing an output of an example embodiment of automata of a temporal dependency;

FIG. 8C is a state diagram of an execution model of the temporal dependency shown in FIG. 8B;

FIG. 9A is a state diagram of a first phase of an execution of the activity instances in which, initially, both activity instances are in the state "Plan";

FIG. 9B is a state diagram of a second phase of the execution of the two activity instances in which the activity instance "Build Dam" changes into the state "Execute";

FIG. 9C is a state diagram of a third phase of the execution of the two activity instances in which the activity instance "Transport Sandbags" changes into the state "Execute" and the dependency is no longer violated;

FIG. 10 is an example embodiment of a user interface context created from data associated with activity instances;

FIG. 11A is a flowchart of an example embodiment of a method to manage a plurality of activities;

FIG. 11B is a flowchart of an example embodiment of the method of FIG. 11A, further including additional operations;

FIG. 11 C is a flowchart of an example embodiment of the method of FIG. 12A, further including additional operations; and

FIG. 12 is a flowchart of an example embodiment of a method to modify a specification of an activity model to be processed by an activity network;

FIG. 13 is a block diagram of a machine-readable medium on which an example embodiment of the management system may be executed.

### DETAILED DESCRIPTION

In the following description, for purposes of explanation, numerous specific details are set forth in order to provide an understanding of various embodiments of the inventive subject matter. It will be evident, however, to those skilled in the art that embodiments may be practiced without these specific details. Further, well-known instruction instances, protocols, structures, and techniques have not been shown in detail. As used herein, the term "or" may be construed in an inclusive or exclusive sense.

In an example embodiment, a system to manage a plurality of activities is disclosed. The system includes, for example, a dependency-definition engine to determine a dependency between a state of a first activity of the plurality of activities and a state of a second activity of the plurality of activities, with the dependency requiring that the state of the second activity change from a first state to a second state for a non-violating change in the state of the first activity from the third state to the fourth state to occur, an activity-monitoring engine to monitor the first activity and the second activity to detect a violation of the dependency; and a remedial-action engine take a remedial action responsive to the detecting of the violation.

In another example embodiment, a method to manage a plurality of activities is disclosed. The method includes, for example, determining a dependency between a state of a first activity of the plurality of activities and a state of a second activity of the plurality of activities, with the dependency requiring that the state of the second activity change from a first state to a second state for a non-violating change in the state of the first activity from a third state to a fourth state to occur; monitoring the first activity and the second activity to detect a violation of the dependency; and taking a remedial action responsive to the detecting of the violation.

Each of these example embodiments, and others, are discussed in detail below.

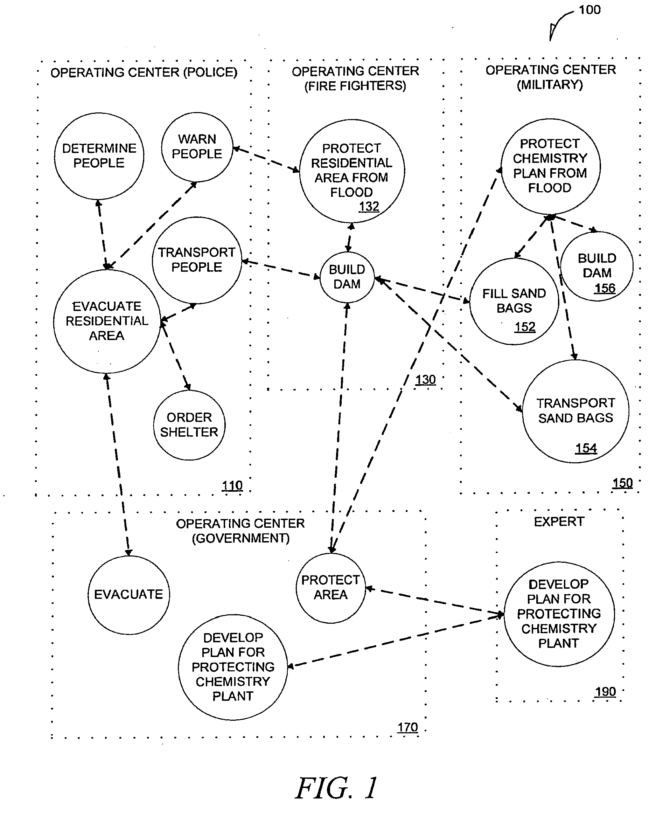

FIG. 1 is an activity diagram of an example disaster recovery plan'100, to which various embodiments may be applied. In this plan, a flood is assumed to be threatening different disaster sites in one or more countries. New, unforeseen challenges emerge, resulting in a catastrophic situation. At one disaster site, a chemistry plant and a residential area are threatened by the flood. If the chemistry plant floods, the residential area has to be evacuated, because of various dangers, including explosions, pollution, and flooding of the area. A response to the flooding of the chemistry plant has not been planned and no-one has ever faced this situation. An explosion occurs at the chemistry plant and the air becomes polluted. A chain-reaction of such events leads to an ever more chaotic situation. In FIG. 1, dependencies between activities of the plan are illustrated using broken lines. Furthermore, the activities are grouped in boxes according to organizations primarily responsible for the activities.

Various people in a government 170 may coordinate response activities. There may be several coordinating operating centers at different levels (not shown) in different governments (not shown) for different disaster sites (not shown), but FIG. 1 focuses, for simplicity, on just one level of one government 170 and one disaster site. An expert 190 may help the government 170 by giving guidance on how to protect the chemistry plant from the flood. This guidance may not only include developing activities (e.g., filling sandbags, transporting sandbags, and building a dam), but also planning activities that may be needed in case the plant is flooded. Fire fighters 130 may protect 132 the residential area from the flood by building a dam. The fire fighters 130 may use sandbags transported 154 by the military 150. The military 150 may also be responsible for filling 152 the sandbags, transporting 154 the sandbags to a disaster site, and building a dam 156. Police 110 may be responsible for evacuating the residential area in case the chemistry plant or the residential area is flooded. The police 110 may need to initiate evacuation before the residential area is flooded. The police 110 may need to take into account the activities of the fire fighters 130 and the military 150 to evaluate if there is a need for initiating evacuation.

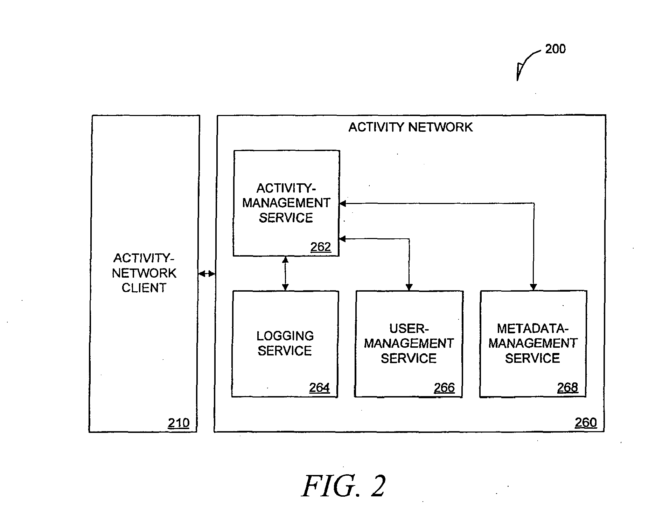

FIG. 2 is a block diagram of an example architecture of a system 200 to manage, execute, and monitor activities, such as the activities shown in the disaster recovery scenario of FIG. 1. The system 200 may include one or more activity-network clients, such as activity-network client 210. The activity-network client 210 may connect to or access services of one more activity networks, such as activity network 260.

The activity network 260 may manage, execute, and monitor activities by processing an activity model. The activity model may describe activities, including activities executed concurrently, and their dependencies. Each of the activities may have an activity type. An activity type is a description of an activity that may be instantiated as an activity instance. The activity model may also specify governance arrangements.

The description of the activity may include: a lifecycle (that is, a subset of a finite set of activity states), a transition function that defines the possible transitions from one activity state to another, an initial activity state, and a transition function that defines activity governance roles (for example, whether a participant must be accountable for, responsible for, consulted with regard to, or informed of a transitioning of the activity to a new state).

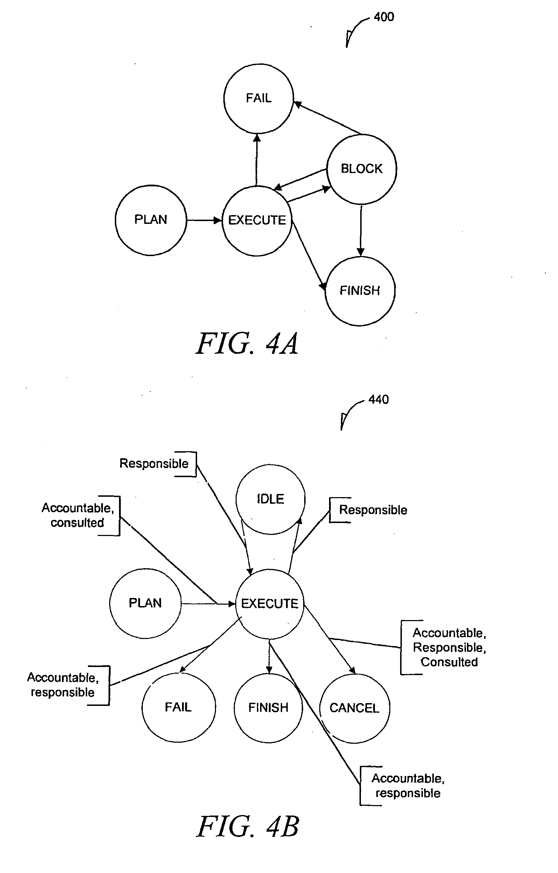

The lifecycle of an activity of a first type may include different states than the lifecycle of an activity of a second type. Thus, an activity of the first type, such as the type shown in FIG. 4A, may have states for planning, executing, failing, blocking, and finishing, whereas an activity of the second type, such as the type shown in FIG. 4B, may have states for planning, executing, idling, failing, canceling, and finishing. Examples of activities that may be of different types (and may have different lifecycles) include decision-making (or strategic) activities and field-operations (or operations) activities.

The governance arrangements may specify which governance role a participant must have to change the state of the activity from a first state to a second state. Governance roles, which may be described as state machines by participants or users, may include an "Accountable" role, a "Responsible" role, a "Consulted" role, and an "Informed" role. In an example embodiment, the "Accountable" role may be assigned to a participant who decides ultimately on the activity, including the governance arrangement for the activity. The "Responsible" role may be assigned to a participant who is responsible for executing the activity. The "Consulted" role may be assigned to a participant who should be consulted prior to a state change. An "Informed" role may be assigned to a participant who should be informed after a state change.

An instance of a particular activity type may include an activity name (e.g. "Transport sand bags"), an activity type (e.g., decision-making or field operations), a current activity state, a list of activity participants, assignments of participants to governance roles, assignments of resources, and assignments of data.

Dependencies may be established between activity instances. Each dependency may be described as a finite automaton (Hoperoft, Motwani et al. 2000) that accepts state changes as input. Dependences may also be represented as linear temporal logic formulas (LTL) (Berard, Bidoit et al. 1999) and then translated into automata. Dependencies may also be represented as graphs (adjacency lists). In an embodiment, the automata directly relate to a native graphical representation of the dependencies such that execution time is minimized and the dependencies need not be translated from LTL into automata.

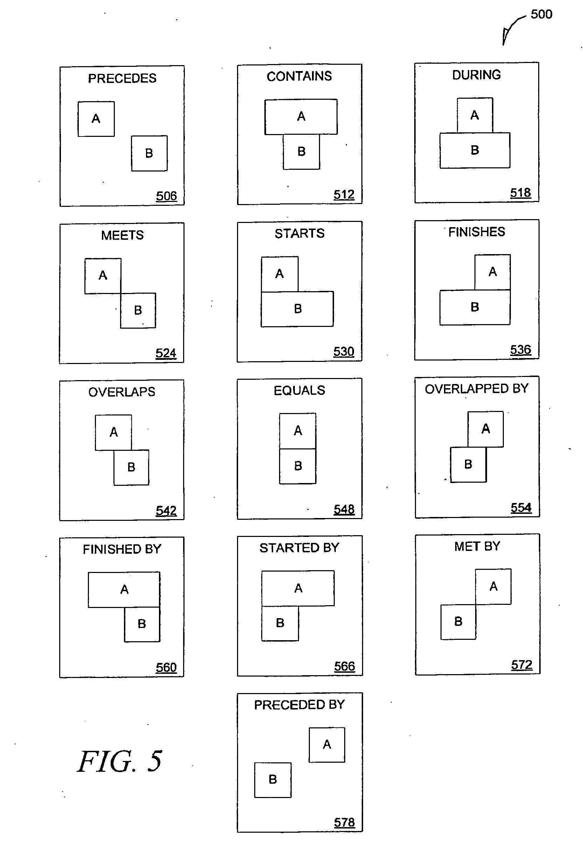

In an example embodiment, a dependency may be conditional. For example, the dependency may be conditional upon a change of the state of the second activity occurring within a time frame relative to the change of the state of the first activity. In other words, the dependency may be a temporal dependency. For example, the dependency may specify that the change of the state of the second activity from the third state to the fourth state must precede, but not follow, the change of the state of the first activity from the first state to the second state. As another example, the dependency may specify that the change of the state of the second activity from the third state to the fourth state must follow the change in the state of the first activity from the first state to the second state. These and additional examples of temporal dependencies are described in detail below with reference to FIG. 5.

In an example embodiment, the dependency may be conditional upon one or more other factors unrelated to the time frame in which the change of the state of the first activity or the change of the state of the second activity occurs.

In an example embodiment, the activity network 260 may expose its functionality to the activity-network client 210 through an interface, such as a software interface (for example, a Web service interface), a hardware interface, a user interface, or another type of interface. The activity-network client 210 may be a user, a machine, a software application running on a machine, or anything capable of using the interface provided by the activity-network client 210. The activity network 260 may include an activity-management service 262, a logging service 264, a user-management service 266, and a data-management service 268.

The logging service 264 may provide functionality for logging or storing events, such as activity state changes, establishment of new dependencies, and so on. The user-management service 266 may provide the functionality for managing users, including creating users, getting or providing information about users, and removing users. The data-management service 268 may provide the functionality for managing data associated with an activity, including creating the data, getting or providing information about the data, and removing the data. The activity-management service 262 may use the data-management service 268 and the user-management service 266 to assign a user (or a participant) to or associate data with an activity.

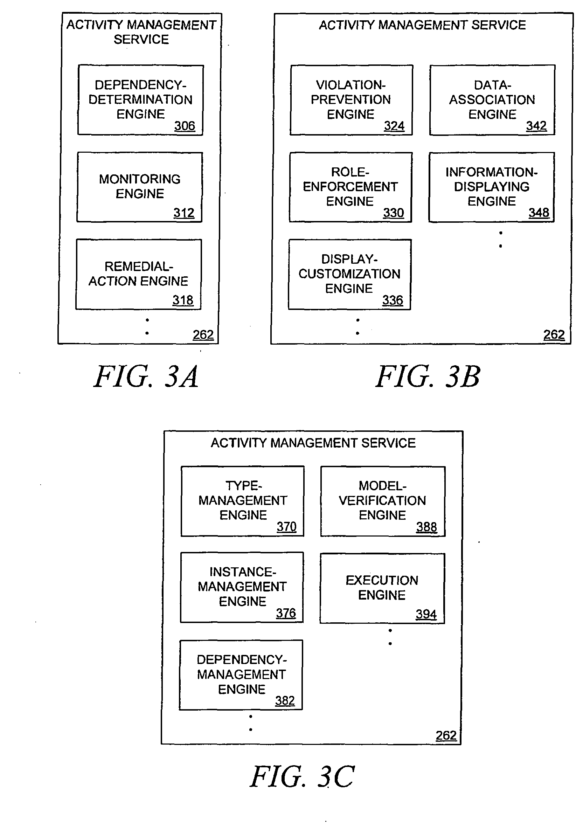

FIG. 3A is a block diagram illustrating various engines of an example embodiment of the activity-management service 262 of FIG. 2. The activity-management service 262 may include, for example, a dependency-determination engine 306, an activity-monitoring engine 312, and a remedial-action engine 318.

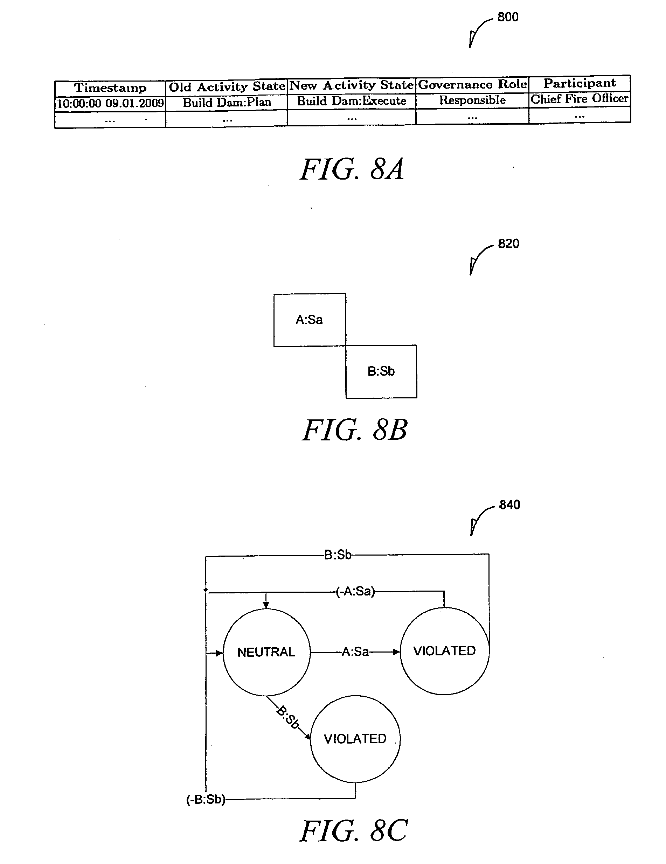

The dependency-determination engine 306 may determine a dependency between a change of a state of a first activity and a change of a state of a second activity. The dependency may specify, for example, that the state of the second activity must change from a first state to a second state when the state of the second activity changes from a third state to a fourth state. In this case, a violation of the dependency occurs if the state of the first activity changes from a third state to a fourth state, but the state of the second activity does not change from a first state to a second state. The dependency-determination engine 306 may interpret a dependency according to a representation of the dependency as a state machine or automata, such as the automata described in relation to FIG. 8A, FIG. 8B, and FIG. 8C.

The activity-monitoring engine 312 may monitor the first activity and the second activity to detect whether a violation of the dependency occurs. For example, if the state of the first activity changes from the third state to the fourth state, but the state of the second activity does not change from the first state to the second state, the activity-monitoring engine 312 may detect the violation.

The remedial-action engine 318 may take a remedial action responsive to a detection of the violation. The remedial action may include notifying a user or the activity-network client 210 of the violation, for example, by causing the display of a visual indicator, such that the user or the activity-network client 210 may take one or more actions to correct the violation. The remedial action may include initiating the changing of the states of one or more activities such that the dependency is no longer violated. For example, the remedial-action engine 318 may change the state of the first activity from the second state to the first state or to a fifth state or the remedial-action engine 318 may change the state of the second activity to the second state.

FIG. 3B is a block diagram showing various additional engines of an example embodiment of the activity-management service 262 of FIG. 2. The activity-management service 262 may include, for example, a violation-prevention engine 324, a role-enforcement engine 330, a display-customization engine 336, a data-association engine 342, and an information-displaying engine 348.

The violation-prevention engine 324 may prevent a change of the state of the first activity from the third state to the fourth state if the change will cause the violation to occur.

The role-enforcement engine 330 may prevent a change of the state of the first activity from the third state to the fourth state based on an initiator of the change not having a predetermined role. For example, if the change of the state of the first activity from the third state to the fourth state can only be performed by a participant having the "Responsible" role, and the initiator does not have the "Responsible" role, the role-enforcement engine 330 may prevent the change.

The display-customization engine 336 may cause the display of information about one or more activities in a user interface, with the one or more activities selected or filtered according to a role or a preference of the user.

The data-association engine 342 may associate data with one or more activities. The data may include any information about the one or more activities, such as information about the location of the activity (for example, an address); a visual representation of the activity, such as an icon; a Uniform Resource Locator (URL) of a resource that can be used in conjunction with the activity, such as a map-providing resource, a directions-providing resource, or an information-displaying resource.

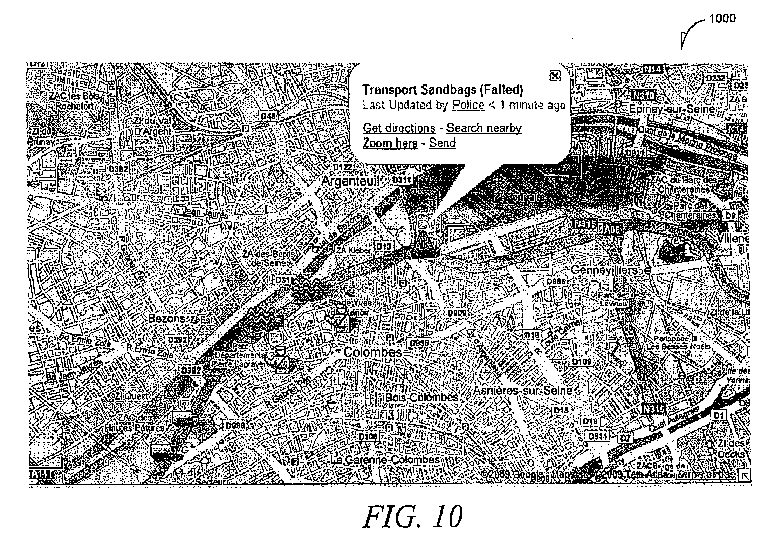

The information-displaying engine 348 may cause a display of information about the activity in a user interface context created from the data. For example, the information-displaying engine 348 may use the data associated with the activity to cause display of a visual representation of the activity at the location of the activity on an interactive map. An example of such a display is discussed with reference to FIG. 10.

FIG. 3C is a block diagram showing various additional engines of an example embodiment of the activity-management service 262 of FIG. 2. The activity-management service 262 may include, for example, a type-management engine 370, an instance-management engine 376, a dependency-management engine 382, a model-verification engine 388, and an execution engine 394.

The type-management engine 370 may handle a modifying of activity types, including a creating, removing, or changing of activity types. In an example embodiment, the type-management engine 370 may manage an activity type based on an activity-type definition (or specification) associated with the activity type. The type-management engine 370 may receive an activity-type definition or a request to modify the activity-type definition from an external source, such as the activity-network client 210. The type-management engine 370, perhaps in conjunction with the role-enforcement engine 330, may prevent the modification of an activity type if an initiator of the request lacks a proper governance role.

The instance-management engine 376 may handle a modifying of activity instances, including a creating, removing, or changing of activity instances. In an example embodiment, the instance-management engine 370 may manage an activity instance based on an activity-type definition associated with the activity instance. The instance-management engine 376 may receive a specification of the activity instances or a request to modify the specification of the activity instances from an external source, such as the activity-network client 210. The instance-management engine 376, perhaps in conjunction with the role-enforcement engine 330, may prevent the modification of the specification of the activity instances if an initiator of the request lacks a proper governance role.

The dependency-management engine 382 may handle a modifying of dependencies, including a creating, removing, and changing of dependencies between activities, including dependencies between states of activities. In an example embodiment, the activities may be represented as activity instances. In another example embodiment, the dependencies between states of activities may be based on activity-type definitions associated with the activities. The dependency-management engine 382 may receive a specification of the dependencies or a request to modify the specification of the dependencies from an external source, such as the activity-network client 210. The dependency-management engine 382 may also receive, from an external source, a definition of automata that includes rules for interpreting a dependency, such as the automata described with reference to FIG. 8A, FIG. 8B, and FIG. 8C. The dependency-management engine 382, perhaps in conjunction with the role-enforcement engine 330, may prevent the modification of the specification of the dependencies if an initiator of the request lacks a proper governance role.

The model-verification engine 388 may verify that an activity model is valid. For example, a problem occurs when dependencies between states of two or more activities form a cyclic graph. This cyclic graph may violate, for example, transitivity of dependencies (e.g., A occurs before B, B occurs before C, and C occurs before A). The model-verification engine 388 may verify that an activity model is valid by forming a directed graph out of the dependencies and checking for cycles using a well-known algorithm, such as the Tarjan algorithm (Tarjan 1971). If the graph has cycles, the activity model is not valid. In an example embodiment, with this algorithm, the model-verification engine 388 may verify the activity model (fmd cycles) in linear time (Number of Vertexes)+INumber of Edgesi).

The execution engine 394 may execute one or more activity instances. To execute an activity instance, the execution engine 394 may perform one or more execution operations, such as changing the state of the activity instance or managing a violation of a dependency. The execution engine 394 may also manage one or more state changes of one or more activities concurrently because one or more activity instances may be running in parallel. In an example embodiment, the execution engine 394 logs a result of each execution operation using a logging service, such as logging service 264.

In an example embodiment, the execution engine 394 may receive a notification from the activity-network client 210 that a user (for example, a person or a machine), has requested an activity state change. The execution engine 394 may check whether the user has an appropriate governance role to make the activity state change. If the user does not have the appropriate governance role, the execution engine 394 may prevent the user from making the state change, for example using the role-enforcement engine 330. The execution engine 394 may check whether the activity state change would violate an activity state dependency, for example using the dependency-determination engine 306. If the requested activity state change would result in the violation of an activity state dependency, the execution engine 394 may prevent the activity state change, for example using the violation prevention engine 324. Alternatively, the execution engine 394 may take a remedial action, such as causing a visual display of the violation or initiating one or more additional activity state changes so that the activity state dependency is no longer violated.

Thus, the activity-management service 262 may provide an activity- or process-management capability that, unlike certain flexible-process solutions is not control-flow oriented; is flexible on the activity level, not just the process level; supports modeling of fundamentally different activities (e.g., decision-making activities vs. activities in the field), each of which may have a different underlying lifecycle; supports definitions of governance roles for each activity (that is, who is accountable, responsible, consulted, and informed of each activity, and how these governance roles are related to each activity); and supports an articulation and management of the dependencies between activities during execution of the activities, the dependencies going beyond order dependencies (A follows after B), such as the dependencies in control-flow-oriented process systems. In one embodiment, the system 200 may be an information technology (IT) process-management solution.

FIG. 4A is a state diagram of an example embodiment of an activity type 400. The example specifies that an instance of an activity of this type has states for planning, executing, failing, blocking, and finishing. The example also specifies, through its transition function, that an activity instance of this type can move from the planning to the execution stage, from the execution to the fail, block, or finish stage, and from the block stage to the execute or finish stage.

FIG. 4B is a state diagram of an example embodiment of an activity type 440 for which governance arrangements are defined. The example specifies that a participant must be assigned as responsible for a change of the state of an instance of an activity of this type from an idle state to an execute state, from the execute state to the idle state, from the execute state to a cancel state, and from the execute state to a finish state. The example also specifies that a participant must be assigned as accountable for a change of the state of an instance of an activity of this type from a plan state to the execute state, from the execute state to the cancel state, and from the execute state to a fail state. The example also specifies that a participant must be assigned as consulted for a change of the state of an instance of an activity of this type from the plan state to the execute state and from the execute state to the cancel state.

FIG. 5 is a block diagram illustrating examples of visual representations of types, designated generally at 500, of temporal dependencies. These types of temporal dependencies are based on the types of temporal dependencies defined by Allen (Allen 1983), including precedes 506, contains 512, during 518, meets 524, starts 530, finishes 536, overlaps 542, equals 548, overlapped by 554, finished by 560, started by 566, met by 572, and preceded by 578. Each activity instance or type may interpret these temporal dependencies differently. For example, in an example embodiment, a dependency specifying that a change of a state of a first activity to a first state "precedes" 506 a change of a state of a second activity to a second state may be interpreted as violated if the following events occur: (1) the state of the first activity changes to the first state and does not change to a state other than the first state within a specific time frame or (2) the state of the second activity changes to the second state and does not change to a state other than the second state within a specific time frame before the state of the first activity changes to the first state. However, in another example embodiment, the dependency may be interpreted as violated under different conditions, such as in a different time frame. Each of the other temporal dependencies may also have multiple interpretations.

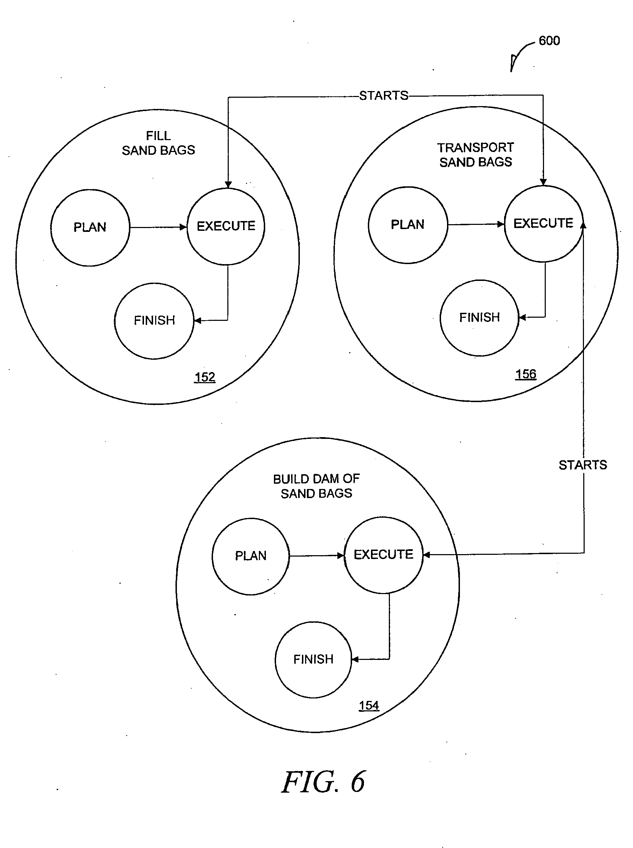

FIG. 6 is a diagrammatic representation of an example embodiment of an activity model 600 that includes multiple activities having interrelated dependencies. The first activity (of, for example, a "strategic activity" activity type), the fill sand bags 152 activity, is related to two or more operational activities (of, for example, an "operational activity" activity type), including the transport sand bags 156 activity and the build dam of sand bags 154 activity. A first dependency, a "starts" temporal dependency, specifies that, for a non-violating change of the fill sand bags 152 activity to the "Execute" state to occur, the transport sand bags must also change to the "Execute" state within a specific time frame. A second dependency and a third dependency, each a "starts" temporal dependency, specify, respectively, that, for a non-violating change of the transport sand bags 156 activity to the "Execute" state to occur, the fill sand bags 152 activity and the build dam of sand bags 154 activity must also change to the "Execute" state within a specific time frame. A fourth dependency, a "starts" temporal dependency, specifies that, for a non-violating change of the build dam of sand bags 154 activity to change to the "Execute" state, the transport sand bags 156 activity must also change to the "Execute" state within a specific time frame. The activity model 600 may include many other dependencies (not shown) between activities. For example, the activity model 600 may include dependencies that specify that, if an activity of the "strategic activity" activity type fails, activities of the "operational activity" activity type are canceled. Or the activity model 600 may specify that, if one of the activities of the "operational activity" activity type fails, then an activity of the "strategic activity" activity type must change to a "Cancel" state. Thus, the activity model 600 may allow the modeling of real-world scenarios that cannot be modeled in traditional workflow systems.

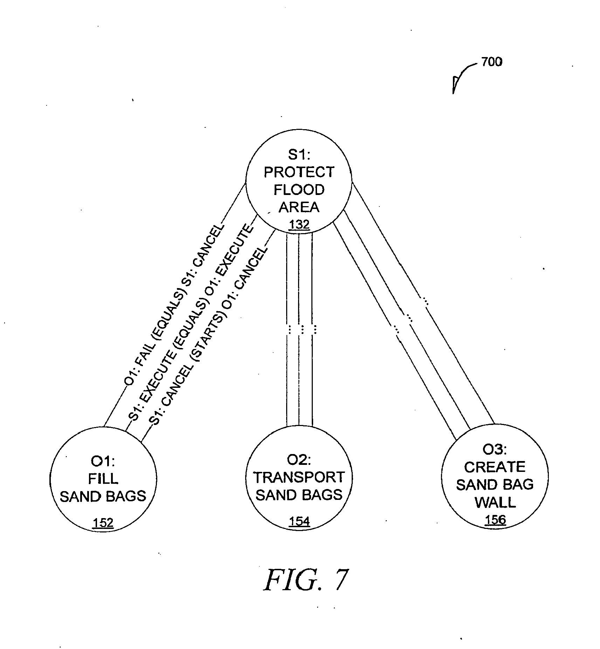

FIG. 7 is a diagrammatic representation of an example embodiment of an activity model 700 that includes multiple dependencies between a single strategic activity and multiple operational activities. A first dependency, "01: Fail (Equals) Si: Cancel," specifies an "Equals" temporal dependency between a change of the state of the fill sand bags 152 activity to a "Fail" state and a change of the state of the protect flood area 132 activity to a "Cancel" state. A second dependency, "Si: Execute (Equals) 01: Execute" specifies an "Equals" temporal dependency between a change of the state of the protect flood area 132 activity to an "Execute" state and the change of the fill sand bags 152 activity to the "Execute" state. A third dependency, "Si: Cancel (Starts) 01: Cancel" specifies a "Starts" temporal dependency between a change of the state of the protect flood area 132 activity to the "Cancel" state and the change of the fill sand bags 152 activity to the "Cancel" state. The same or different dependencies may exist between the protect flood area 132 activity and other activities, including the transport sand bags 154 activity and the create sand bag wall 156 activity.

FIG. 8A is a table diagram showing an example embodiment of an execution trace 800 generated by the activity-management service 262, for example, in conjunction with the logging service 264. The execution trace 800 may include an entry for each change in the state of an activity. Each entry may include a timestamp, an old activity state, a new activity state, a governance role, and a participant. For example, the first entry in execution trace 800 specifies that, on the date of September 1, 2009, at the time of 10:00:00, a "Chief Fire Officer" participant, who had a "Responsible" governance role, changed the state of the "Build Dam" project from "Plan" to "Execute."

FIG. 8B is diagram showing an output of an example embodiment of automata 820 of a "Meets" temporal dependency. In an embodiment, dependencies between activities are represented in the activity-management service 262 by automata 820. Each time the state of an activity changes, the state change is input into the automata, which changes its state. In an embodiment, depending on the input, the automata may change into a violated state, which means that a dependency is violated, or a neutral state, which means that the dependency is not violated. A detection of a dependency violation may be done in linear time (0(INumber of dependencies 1). In an embodiment, the amount of work that is done by the system may be dramatically decreased by only inputting state changes into the automata interested in the state change (01Number of dependencies interested in state change]), because usually a state change only affects one dependency (OW). The example automata 820 shown in FIG. 8B specifies that activity B has to be in the state Sb immediately after activity A changes to the state Sa. In an example embodiment, automata may be represented as adjacency lists (graphs) in the system (Hoperoft, Motwani et al. 2000).

FIG. 8C is a state diagram of an execution model 840 of the temporal dependency shown in FIG. 8B. If the input for the automata is A:Sa (which means activity A has changed into state Sa), then the automata changes into the violated state, because activity B has to follow into the state Sb. There are two choices now: Either activity A can switch into another state and the dependency is not violated anymore (is neutral) or activity B can switch into the state Sb and the dependency is not violated anymore (is neutral). Note that this temporal dependency may be interpreted differently by different automata. The set interpretations of temporal dependencies described with respect to FIG. 5 are just one set of possible interpretations. A set of automata for each dependency may have a unique interpretation of each dependency. Note that other dependencies can be represented in this way; that is, the activity model is not limited to specifying temporal dependencies between activity states

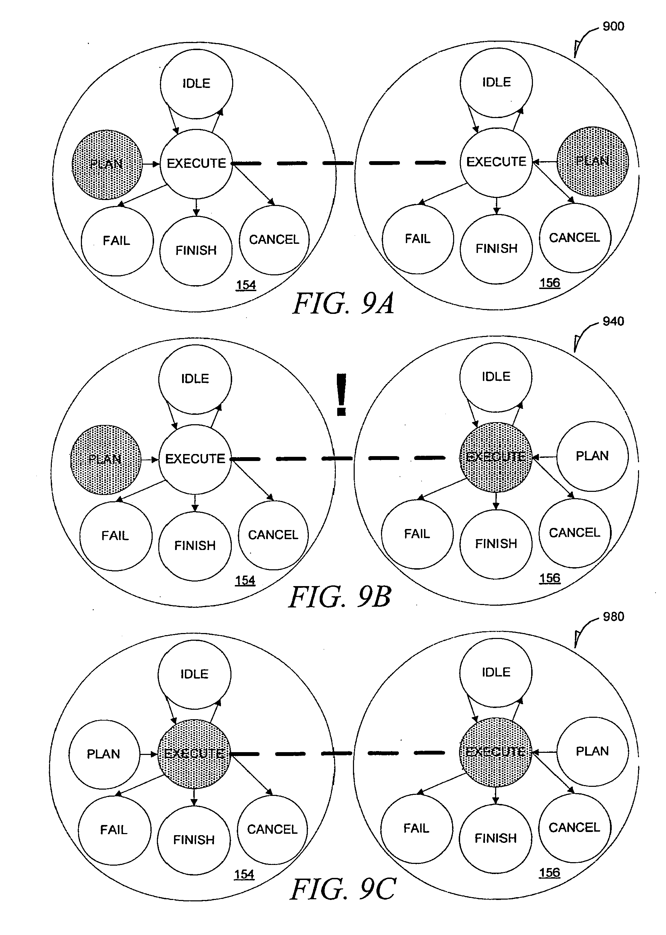

FIG. 9A, FIG. 9B, and FIG. 9C are state diagrams illustrating an example of phases of an execution of two activity instances. In this example, the two activity instances ("Transport Sandbags" and "Build Dam") are of the same activity type ("field operation"). There is a dependency ("equals") between both activity instances with regard to their respective "Execution" states. In an embodiment, this dependency is interpreted as specifying that both activity instances have to enter the state "Execute" at the same time. FIG. 9A is a state diagram of a first phase 900 of the execution of the two activity instances in which, initially, both activity instances are in the state "Plan." FIG. 9B is a state diagram of a second phase 940 of the execution of the two activity instances in which the activity instance "Build Dam" changes into the state "Execute." The activity-management service 262 may determine that this state change violates the dependency. In response, the activity-management service 262 may take a remedial action such as causing the display of a visual indicator of the violation so that a user may respond. FIG. 9C is a state diagram of a third phase 980 of the execution of two activity instances in which the activity instance "Transport Sandbags" changes into the state "Execute" and the dependency is not violated anymore.

FIG. 10 is an example embodiment of a user interface context 1000 created from data associated with activity instances. Although the awareness of current states of activities itself is already a powerful monitoring mechanism, monitoring capabilities may be enhanced by allowing a user to select activity instances that they are interested in and then making only the selected activity instances visible to that user, thereby allowing a user to filter activity instances based on various factors, such as the data attached to the activity instances, or allowing users to view activity instances in various contexts (for example, on a map). For example, in FIG. 10, various activity instances or event data are associated with and displayed on an interactive map. The exclamation point icon in the red triangle shows that an activity instance has changed to the "Fail" state. A more detailed view of information associated with the activity shows that the failed activity is a "Transport Sandbags" activity and that the state of the activity was updated by the Police less than one minute ago. Other icons on the map provide a visual representation of other activity instances or events.

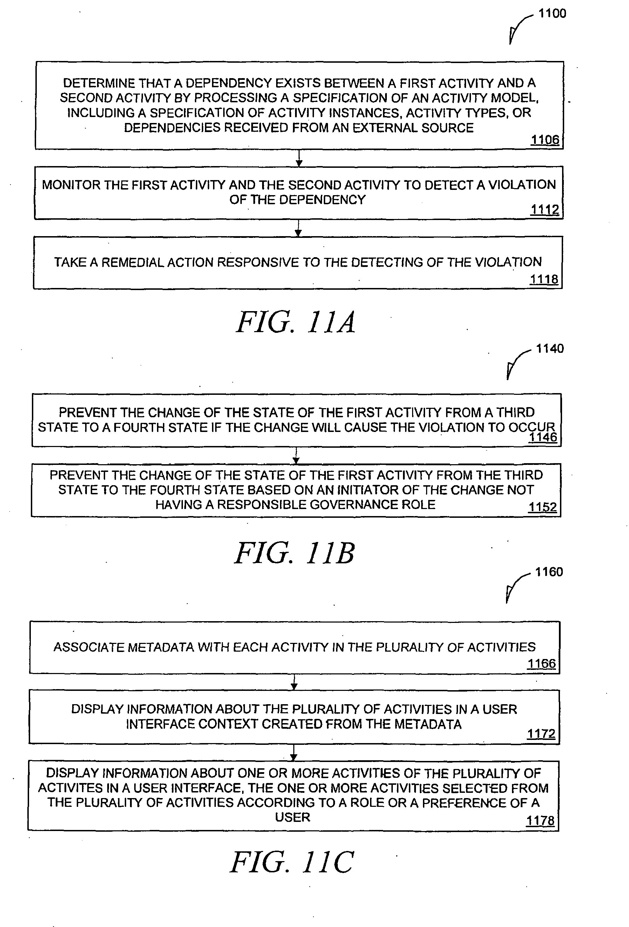

FIG. 11A is a flowchart of an example embodiment of a method 1100 to manage a plurality of activities. The method 1100 includes determining 1106 that a dependency exists between a first activity in the group of activities and a second activity in the group of activities. As described with reference to FIG. 2, FIG. 3A, FIG. 3B, and FIG. 3C, the dependency can be determined during the processing of an activity model, including a specification of activity instances, activity types, or dependencies. A specification of the dependency may be received by the activity network 260 from an external source, such as the activity-network client 210, for example, through the dependency-management engine 382. Alternatively, the dependency may be inferred from a specification of a type of activity upon which instances of the first activity or the second activity are based or from a specification of the instances of each of the activities in the plurality of activities. The dependency may specify, for example, that the state of the second activity change from a first state to a second state for a non-violating change in the state of the first activity from a third state to a fourth state to occur. Moreover, the dependency may be a temporal dependency (for example, the temporal dependency described with reference to FIG. 8C), or the dependency may be conditional upon one or more other factors unrelated to the time frame in which the change of the state of the first activity or the change of the state of the second activity occurs.

Additional operations of method 1100 include monitoring 1112 the first activity and the second activity to detect a violation of the dependency, and taking 1118 a remedial action responsive to the detecting of the violation. As described above with reference to FIG. 3A, these operations may be performed by the activity network 260, for example, through the activity-monitoring engine 312 and the remedial-action engine 318.

FIG. 11B is a flowchart of an example embodiment 1140 of the method of FIG. 11A, further including preventing 1146 the change of the state of the first activity from the third state to the fourth state if the change will cause the violation to occur (e.g., through the violation-prevention engine 324); and preventing 1152 the change of the state of the first activity from the third state to the fourth state based on an initiator of the change not having a predetermined role (e.g., through the role-enforcement engine 330).

FIG. 11C is a flowchart of an example embodiment 1160 of the method of FIG. 11A, further including associating 1166 data with each activity in the plurality of activities (e.g., through the data-association engine 342); causing 1172 display of information about the plurality of activities in a user interface context created using the data (e.g., through the data-association engine 342); and causing 1178 a display of information about one or more activities of the plurality of activities in a user interface, the one or more activities selected from the plurality of activities according to a role or a preference of a user (perhaps through the display-customization engine 336).

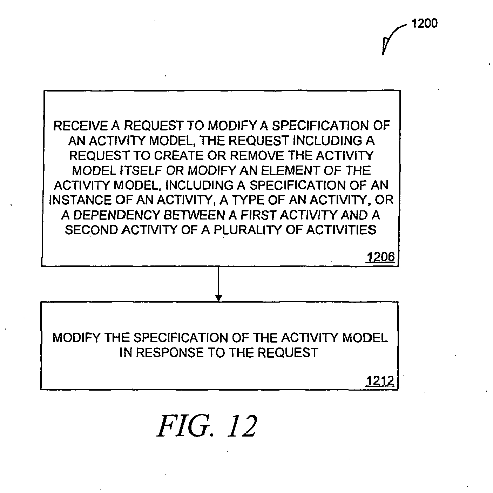

FIG. 12 is a flowchart of an example embodiment of method 1200 for modifying a specification of an activity model to be processed by an activity network, such as activity network 260. The method 1200 includes receiving 1206 a request from the activity-network client 210 or another external source, to modify the specification of the activity model. The request may include a request to add or remove the specification of the activity model itself or change the specification of the activity model. Alternatively, the request may include a request to modify a specification of an instance of an activity of a group of activities, a type of an activity upon which the instance of an activity of the group of activities is based, or a dependency between a first activity of the group of activities and a second activity of the group of activities.

The method 1200 also includes modifying the specification of the activity model in response to the request for processing by an activity network, such as activity network 260. As described with reference to FIG. 3C, the type-management engine 370 may handle the modifying of activity types upon which instances of activities of the group of activities may be based, the instance-management engine 376 may handle the modifying of instances of activities of the group of activities, and the dependency-management engine 382 may handle the modifying of dependencies between instances of activities of the group of activities. The activity model can then be processed by an activity-network, such as the activity network 260.

In an example embodiment (not shown), an additional operation of the method 1200 may prevent the modifying of the specification of the activity model if an initiator of the request does not have an appropriate governance role.

### MODULES, COMPONENTS AND LOGIC

Certain embodiments are described herein as including logic or a number of components, modules, or mechanisms. Modules may constitute either software modules (e.g., code embodied on a machine-readable medium or in a transmission signal) or hardware modules. A hardware module is a tangible unit capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as a hardware module that operates to perform certain operations as described herein.

In various embodiments, a hardware module may be implemented mechanically or electronically. For example, a hardware module may comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

Accordingly, the term "hardware module" should be understood to encompass a tangible entity, be that an entity that is physically constructed, permanently configured (e.g., hardwired) or temporarily configured (e.g., programmed) to operate in a certain manner and/or to perform certain operations described herein. Considering embodiments in which hardware modules are temporarily configured (e.g., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple of such hardware modules exist contemporaneously, communications may be achieved through signal transmission (e.g., over appropriate circuits and buses) that connect the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods described herein may be at least partially processor-implemented. For example, at least some of the operations of a method may be performed by one or processors or processor-implemented modules. The performance of certain of the operations may be distributed among the one or more processors, not only residing within a single machine, but deployed across a number of machines. In some example embodiments, the processor or processors may be located in a single location (e.g., within a home environment, an office environment or as a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., Application Program Interfaces (APIs).)

### ELECTRONIC APPARATUS AND SYSTEM

Example embodiments may be implemented in digital electronic circuitry, or in computer hardware, firmware, software, or in combinations of them. Example embodiments may be implemented using a computer program product, e.g., a computer program tangibly embodied in an information carrier, e.g., in a machine-readable medium for execution by, or to control the operation of, data processing apparatus, e.g., a programmable processor, a computer, or multiple computers.

A computer program can be written in any form of programming language, including compiled or interpreted languages, and it can be deployed in any form, including as a stand-alone program or as a module, subroutine, or other unit suitable for use in a computing environment A computer program can be deployed to be executed on one computer or on multiple computers at one site or distributed across multiple sites and interconnected by a communication network.

In example embodiments, operations may be performed by one or more programmable processors executing a computer program to perform functions by operating on input data and generating output. Method operations can also be performed by, and apparatus of example embodiments may be implemented as, special purpose logic circuitry, e.g., a field programmable gate array (FPGA) or an application-specific integrated circuit (ASIC).

The computing system can include clients and servers. A client and server are generally remote from each other and typically interact through a communication network. The relationship of client and server arises by virtue of computer programs running on the respective computers and having a client-server relationship to each other. In embodiments deploying a programmable computing system, it will be appreciated that that both hardware and software architectures require consideration. Specifically, it will be appreciated that the choice of whether to implement certain functionality in permanently configured hardware (e.g., an ASIC), in temporarily configured hardware (e.g., a combination of software and a programmable processor), or a combination of permanently and temporarily configured hardware may be a design choice. Below are set out hardware (e.g., machine) and software architectures that may be deployed, in various example embodiments.

### EXAMPLE MACHINE ARCHITECTURE AND MACHINE-READABLE MEDIUM

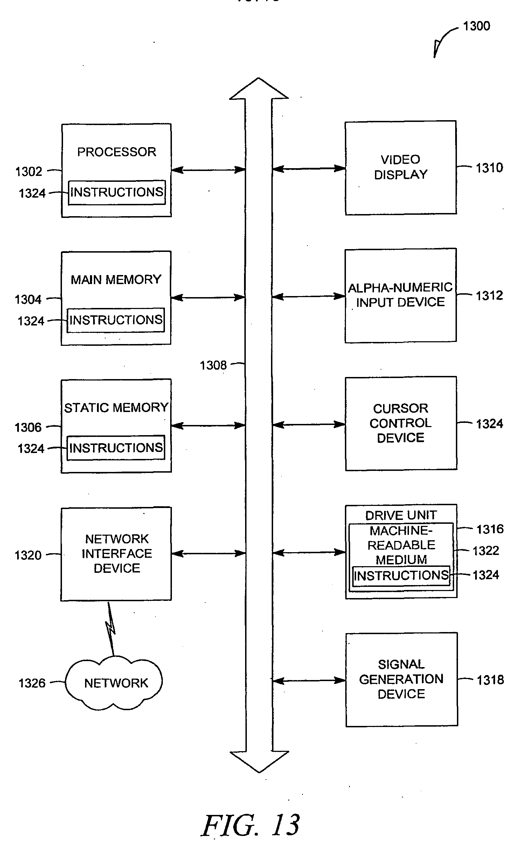

FIG 13 is a block diagram of machine in the example form of a computer system 1300 within which instructions, for causing the machine to perform any one or more of the methodologies discussed herein, may be executed. In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 1300 includes a processor 1302 (e.g., a central processing unit (CPU), a graphics processing unit (GPU) or both), a main memory 1304 and a static memory 1306, which communicate with each other via a bus 1308. The computer system 1300 may further include a video display unit 1310 (e.g., a liquid crystal display (LCD) or a cathode ray tube (CRT)). The computer system 1300 also includes an alphanumeric input device 1312 (e.g., a keyboard), a user interface (UI) navigation (or cursor control) device 1314 (e.g., a mouse), a disk drive unit 1316, a signal generation device 1318 (e.g., a speaker) and a network interface device 1320.

### MACHINE-READABLE MEDIUM

The disk drive unit 1316 includes a machine-readable medium 1322 on which is stored one or more sets of instructions and data structures (e.g., software) 1324 embodying or utilized by any one or more of the methodologies or functions described herein. The instructions 1324 may also reside, completely or at least partially, within the main memory 1304 and/or within the processor 1302 during execution thereof by the computer system 1300, the main memory 1304 and the processor 1302 also constituting machine-readable media. The instructions 1324 may also reside, completely or at least partially, within the static memory 1306.

While the machine-readable medium 1322 is shown in an example embodiment to be a single medium, the term "machine-readable medium" may include a single medium or multiple media (e.g., a centralized or distributed database, and/or associated caches and servers) that store the one or more instructions or data structures. The term "machine-readable medium" shall also be taken to include any tangible medium that is capable of storing, encoding or carrying instructions for execution by the machine and that cause the machine to perform any one or more of the methodologies of the present embodiments, or that is capable of storing, encoding or carrying data structures utilized by or associated with such instructions. The term "machine-readable medium" shall accordingly be taken to include, but not be limited to, solid-state memories, and optical and magnetic media. Specific examples of machine-readable media include non-volatile memory, including by way of example semiconductor memory devices, e.g., Erasable Programmable Read-Only Memory (EPROM), Electrically Erasable Programmable Read-Only Memory (EEPROM), and flash memory devices; magnetic disks such as internal hard disks and removable disks; magneto-optical disks; and compact disc-read-only memory (CD-ROM) and digital versatile disc (or digital video disc) read-only memory (DVD-ROM) disks.

### TRANSMISSION MEDIUM

The instructions 1324 may further be transmitted or received over a communications network 1326 using a transmission medium. The instructions 1324 may be transmitted using the network interface device 1320 and any one of a number of well-known transfer protocols (e.g., Hyper Text Transfer Protocol or HTTP). Examples of communication networks include a local area network ("LAN"), a wide area network ("WAN"), the Internet, mobile telephone networks, Plain Old Telephone (POTS) networks, and wireless data networks (e.g., WiFi and WiMax networks). The term "transmission medium" shall be taken to include any intangible medium that is capable of storing, encoding or carrying instructions for execution by the machine, and includes digital or analog communications signals or other intangible media to facilitate communication of such software.

Although an embodiment has been described with reference to specific example embodiments, it will be evident that various modifications and changes may be made to these embodiments without departing from the broader spirit and scope of the invention. Accordingly, the specification and drawings are to be regarded in an illustrative rather than a restrictive sense. The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A computer-implemented method to manage a plurality of activities, the method comprising:
determining by a processor a dependency between a state of a first activity of the plurality of activities and a state of a second activity of the plurality of activities, the dependency requiring that the state of the second activity change from a first state to a second state for a non-violating change in the state of the first activity from a third state to a fourth state to occur;
monitoring the first activity and the second activity to detect a violation of the dependency; and
taking a remedial action responsive to the detecting of the violation.

2. The method of claim 1, wherein the dependency is a conditional dependency and/or a temporal dependency.

3. The method of claim 1 or 2, wherein the detecting of the violation comprises detecting a change of the state of the first activity from the third state to the fourth state without a corresponding change in the state of the second activity from the first state to the second state.

4. The method of any one of the preceding claims, wherein the remedial action includes at least one of causing a display of a visual alert in a user interface, changing the state of the first activity from the second state to the first state or to a fifth state, or changing the state of the second activity to the second state.

5. The method of any one of the preceding claims, further comprising preventing the change of the state of the first activity from the third state to the fourth state if the change will cause the violation to occur.

6. The method of any one of the preceding claims, further comprising preventing the change of the state of the first activity from the third state to the fourth state based on an initiator of the change not having a predetermined role.

7. The method of any one of the preceding claims, further comprising:
associating data with each activity in the plurality of activities; and
causing a display of information about the plurality of activities in a user interface context created using the data.

8. The method of any one of the preceding claims, further comprising causing a display of information about one or more activities of the plurality of activities in a user interface, the one or more activities selected from the plurality of activities according to a role or a preference of a user.

9. Computer program product comprising computer readable instructions, which when loaded and run in a computer system and/or computer network system, causes the computer system and/or the computer network system to perform operations according to a method of any one of the preceding claims.

10. A computer system to manage a plurality of activities, the system comprising:
a dependency-definition engine to determine by a processor a dependency between a state of a first activity of the plurality of activities and a state of a second activity of the plurality of activities, the dependency requiring that the state of the second activity change from a first state to a second state for a non-violating change in the state of the first activity from a third state to a fourth state to occur;
an activity-monitoring engine to monitor the first activity and the second activity to detect a violation of the dependency; and
a remedial-action engine to take a remedial action responsive to the detecting of the violation.

11. The system of claim 10, wherein the system is further operable to perform a method according to any one of claims 2 to 8.

12. A machine-readable storage medium embodying a set of instructions that, when executed by a processor, causes the processor to perform a method to create an activity model for execution by an activity network, the method comprising:
receiving a request to modify a specification of an activity model, the specification of the activity model including a plurality of instances of activities and a specification of a dependency between a change of a state of a first instance of the plurality of instances and a change of a state of a second instance of the plurality of instances, the first instance and the second instance of the plurality of instances having a first type or a second type, the first type having a first lifecycle including a first plurality of states, the second type having a second lifecycle including a second plurality of states, the second plurality of states including at least one state that is not included in the first plurality of states, the activity model to be processed by the activity network; and
responsive to the receiving of the request, modifying the specification of the activity model.

13. The machine-readable storage medium of claim 12, wherein the first plurality of states includes a start state and an end state.

14. The machine-readable storage medium of claim 12 or 13, further comprising: receiving a definition of automata for a temporal dependency, the automata
including rules for interpreting the temporal dependency; and
basing the specification of the dependency on the automata for the temporal dependency.

15. The machine-readable storage medium of any one of claims 13 to 15, wherein the modifying of the specification is not performed if an initiator of the request does not have a predetermined role.

16. A system comprising:
means for receiving a request to modify a specification of an activity model, the specification of the activity model including a plurality of instances of activities and a specification of a dependency between a change of a state of a first instance of the plurality of instances and a change of a state of a second instance of the plurality of instances, the first instance and the second instance of the plurality of instances having a first type or a second type, the first type having a first lifecycle including a first plurality of states, the second type having a second lifecycle including a second plurality of states, the second plurality of states including at least one state that is not included in the first plurality of states, the activity model to be processed by an activity-management service; and
means for modifying the specification of the activity model responsive to the receiving of the request.

17. The system claim 16, wherein the system further comprises means to perform a method embodied as a set of instructions according to a machine-readable storage medium according to any one of claims 13 to 15.
